# EUROPÄISCHE PATENTANMELDUNG

(11) **EP 2 084 955 A1**
(43) Veröffentlichungstag der Anmeldung: **05.08.2009**
(21) Anmeldenummer: 09001207.1
(22) Anmeldetag: 29.01.2009
(51) Int. Cl.: A01G 1/04

(54) **Aufzuchbeutel**

(30) Priorität: 01.02.2008 DE 202008001453 U
(71) Anmelder: Bischof+Klein GmbH & Co. KG, 49525 Lengerich (DE)
(72) Erfinder: Bergmann, Reinhard, 49134 Wallenhorst (DE)
(74) Vertreter: Bünemann, Egon

(57) **Zusammenfassung**

Ein Aufzuchtbeutel (1,12) für Mikroorganismen mit aus Kunststofffolie gebildeten Wänden (2), bei denen zumindest ein für Sauerstoff und Kohlendioxid durchlässiger Wandbereich (3) mehrlagig mit zumindest einer Lage aus mikroporöser Folie (5,7,9,10,15,17,19,20) gebildet ist, wird zur besseren Abstimmung und Anpassung an Barriere- und Filterfunktionen in der Weise ausgestaltet, dass die mikroporöse Folie (5,7,9,10,15,17,19,20) auf- oder abreißbar ausgebildet und als Außenlage mit einer dichten Randnaht (6,8,11,16,18,21) mit dem übrigen Aufzuchtbeutel (1,12) abschließt.

## Beschreibung

Die Erfindung betrifft einen Aufzuchtbeutel für Mikroorganismen, wie er beispielsweise aus der DE-OS 26 15 680 bekannt ist. Solche Aufzuchtbeutel für Mikroorganismen sind regelmäßig sterilisierbar, feuchtigkeitsfest und verrottungsfest auszubilden, um innenseitig die Entwicklung von Mikroorganismen wie beispielsweise Pilze oder dergleichen zu ermöglichen. In dieser Hinsicht eigenen sich insbesondere Gestaltungen aus Kunststofffolie. Dabei ist allerdings ein Austausch von Sauerstoff und, im Gegenzug, Kohlendioxid für die Aufzucht zu ermöglichen, ohne daß damit ein Eindringen unerwünschter Bakterien oder sonstiger Keime in Kauf zu nehmen ist. Der Kunststoffbeutel nach dem Stand der Technik hat eine für die Aufzucht flachliegenden Anordnung oberseitig zu einem durchlässigen Wandbereich perforiert und mit einer mikroporösen Folie unterlegt. Der perforierte Wandbereich gewährleistet eine hinreichend robuste Wandgestaltung des Aufzuchtbeutels und eine hinreichende Durchlässigkeit durch diesen Wandbereich. Die eigentlich Filterfunktion, mit der Gase, z. B. Sauerstoff und Kohlendioxid, durchgelassen aber unerwünschte Fremdstoffe und Bakterien ausgegrenzt werden, kommt dann der mikroporösen Folie zu.

Es hat sich allerdings gezeigt, daß die Durchlässigkeit der mikroporösen Folie schlecht auf den jeweiligen Aufzuchtbedarf abgestimmt ist. Insbesondere ist häufig zum Start einer solchen Aufzucht im Beutel zwar nur ein geringer Sauerstoffbedarf und auch eine geringe Kohlendioxidabgabe gegeben, allerdings begleitet mit einem hohen Schutzbedarf der Mikroorganismen gegen unerwünschte Stoffe und Keime, während nach fortgeschrittenem Wachstum der Mirkoorganismen ein hoher Gas-Austauschbedarf entsteht, begleitet allerdings von einer sinkenden Empfindlichkeit der Mikroorganismen-Kultur gegenüber Fremdeinwirkungen.

Aufgabe der Erfindung ist es dementsprechend, einen solchen Aufzuchtbeutel hinsichtlich der Barriere- und Filterfunktion der Folienwandung adaptionsfähig auszugestalten und eine sowohl mit Rücksicht auf die Fertigungsbedingungen solcher Aufzuchtbeutel wie auch für die Handhabungsbedingungen im Zuge einer Aufzucht praktische aber variable Gestaltung zu schaffen.

Gemäß der Erfindung wird diese Aufgabe von einem Aufzuchtbeutel nach dem Oberbegriff des Anspruchs 1 ausgehend durch die kennzeichnenden Merkmale des Anspruchs gelöst.

Es hat sich gezeigt, daß ein solcher Aufzuchtbeutel mit einer außenliegenden mikroporösen Folie, die randseitig dicht, gegenüber dem übrigen Beutel abzuschließen ist, durch Auf- oder Abreißen der Folie zu einem besseren Gasaustausch gebracht werden kann, sobald dies erforderlich ist. Insbesondere kann der Beutel nach dem Start einer Mikroorganismen-Kultur zunächst mit Rücksicht auf den Schutzbedarf gegenüber Austrocknung und gegenüber Fremdkeime dichter abgeschlossen sein als dann, wenn sich die Kultur entwickelt hat.

Das Auf- und Abreißen kann durch eine Außenlage reißbarer Folie erzielt werden, die von ihrer Fertigung, beispielsweise als mit Kreide hoch gefüllte und stark gereckte Polyolefin-Folie, leicht aufreißbar ist oder die als Vlies, in einer verdichteteren vernetzter Form mit Mikroporen versehen, Schwächungslinien als "Sollbruchstellen" erhält. Auch sonstige, fein perforierte Folie mit hoher Rißfortpflanzung oder geringem Reißwiderstand kann hier eingesetzt werden.

Ebenso kann die Folie, insbesondere dann, wenn sie für die praktische Handhabung zu reißfest erscheint, mit einer schwachen, peelbaren Randnaht aufgesiegelt oder aufgeklebt sein, so daß sie sich durch Lösen der Naht auf- und oder abziehen läßt. Im Allgemeinen genügt dann für einen verbesserten Gasaustausch ein Aufbrechen der Außenlage, so daß die Außenlage nicht komplett entfernt werden muß. Ein komplettes Abziehen der Außenlage kann aber alternativ vorgesehen werden.

Sowohl beim Aufreißen der mikroporösen Folien wie auch bei einem Aufreißen der Naht kann ein Aufreißfaden oder deren mehrere genauso wie eine über die Randnaht überstehende Griffahne der mikroporösen Folie der leichteren Handhabung dienen.

Vorzugsweise ist direkt oder indirekt unter der Außenlage aus mikroporöser Folie in dem durchlässigen Wandbereich noch die sonstige - robuste - Kunststofffolie des Aufzuchtbeutels, meist in einem Außenbereich und Rückenbereich undurchlässig ausgebildet, beibehalten. Allerdings ist dort die Durchlässigkeit sicherzustellen. Dies kann in feinporiger Form durch eine entsprechende Perforation erzielt sein. Es kann aber auch eine relativ grobe Lochung oder Nadelung verwandt werden, die dann für die Filterfunktion durch eine feinporige Folie, insbesondere mikroporöse Folie unter der Außenlage abgedeckt wird. Diese untere Lage kann dann auch auf der Innenseite der gelochten oder genadelten Wandungsfolie angebracht sein. Ebenso ist es möglich, noch weitere Folien zu einer stufenweisen Regulierung der Gasdurchlässigkeit übereinander anzuordnen. Zweckmäßig können dann die Außenlage und die nächstfolgende Folie(n) mit unterschiedlichen Porenweiten versehen werden, die von außen nach innen zunehmen. Durch ein Aufbrechen der Lagen ist von außen stufenweise eine höhere Gasdurchlässigkeit zu erzielen.

Eine zweilagige Ausbildung des durchlässigen Wandbereichs mit einer perforierten Folienwandung und nur einer Außenlage aus mikroporöser Folie kommt insbesondere dann in Betracht, wenn die besondere Schutz- und Filterfunktion der Außenlage nur in einem begrenzten Zeitraum nach der Startphase der Mirkoorganismen-Kultur benötigt wird.

Eine leicht aufreißbare mikroporöse Folie mit vorgegebenen Porenweiten läßt sich z. B. mit Hilfe einer kreidegefüllten Polyolefin-Folie, vorzugsweise einer Polypropylen-Folie, ggf. auch einer Polyethylen-Folie, erzielen. Diese muß so stark gereckt werden, daß das Additiv beim Recken in der Folie Poren erzeugt. Die Porengröße ist mit dem Reckverhältnis veränderbar. Solche Polyolefin-Folien sind dann in Verbindung mit Polyolefin-Beutelfolien gut durch Siegeln zu verbinden und erleichtern ein sortengerechtes Recycling.

Folien mit sehr kleinen Poren sind auch aus Wirrlagen eines Vlies-Materials aus Kunststoff durch Verdichten und Verketten herstellbar. Ebenso kommen fein genadelte oder fein perforierte Folien in Betracht. In jedem Fall ist es wichtig, daß das Material feuchtigkeitsfest, mikroorganismenfest und verrottungsfest ist. Die Folie muß genau wie die übrige Folie eines solchen Aufzuchtbeutels üblicherweise sterilisierbar sein, etwa durch eine γ-Bestrahlung oder durch Begasung mit Ethylenoxid.

Soweit bei der Folie ein hochreißfestes Vlies oder eine sonstige fein perforierte Folie hoher Festigkeit zum Einsatz kommt, können bzw. müssen Schwächungslinien das Aufreißen erleichtern. Es kann aber auch eine Öffnung der Außenlage an der Naht erfolgen, die beispielsweise als Siegel- bzw. Peelnaht leicht aufreißbar gestaltet sein kann. Ebenso kann eine Klebenaht hinreichend dicht aber peelbar ausgestaltet sein.

Im Ergebnis läßt sich damit ein Aufzuchtbeutel so gestalten, daß er in der Startphase der Mikroorganismen-Kultur, die darin angesetzt ist, dem geringen Bedarf an Sauerstoffzufuhr von außen und dem geringen Anfall von Kohlendioxid entsprechend einen dichteren Abschluß nach außen schafft, der einem Austrocknen entgegenwirkt und der auch einem unerwünschten Eindringen von Mikroorganismen vorbeugt. Nachdem sich aber die Kultur entwickelt und ausgeweitet hat und regelmäßig auch weniger empfindlich geworden ist, wird dem höheren Ventilationsbedarf entsprechend die Außenlage geöffnet. Darunter kann immer noch eine mikroporöse Folie, vorzugsweise mit größerer Porenweite und dementsprechend größerer Durchlässigkeit zur Verfügung stehen. Es kann aber auch im einfachsten Fall eine perforierte Folienwand allein als Filter belassen bleiben.

Ausführungsbeispiele der Erfindung sind in den Zeichnungen dargestellt und werden nachfolgend näher beschrieben. In der Zeichnung zeigen:
- Fig. 1: schematisierte Ansicht eines Aufzuchtbeutels in einer ersten Ausführungsform,
- Fig. 2: schematisierte Ansicht eines Aufzuchtbeutels in einer zweiten Ausführungsform,
- Fig. 3: Schnitt nach Linie III-III in Fig. 1,
- Fig. 4: Schnitt entsprechend Fig. 3 in einer abgewandelten Ausführungsform,
- Fig. 5: Schnitt nach Linie V-V in Fig. 2 und
- Fig. 6: Schnitt entsprechend Fig. 5 zu einer abgewandelten Ausführungsform.

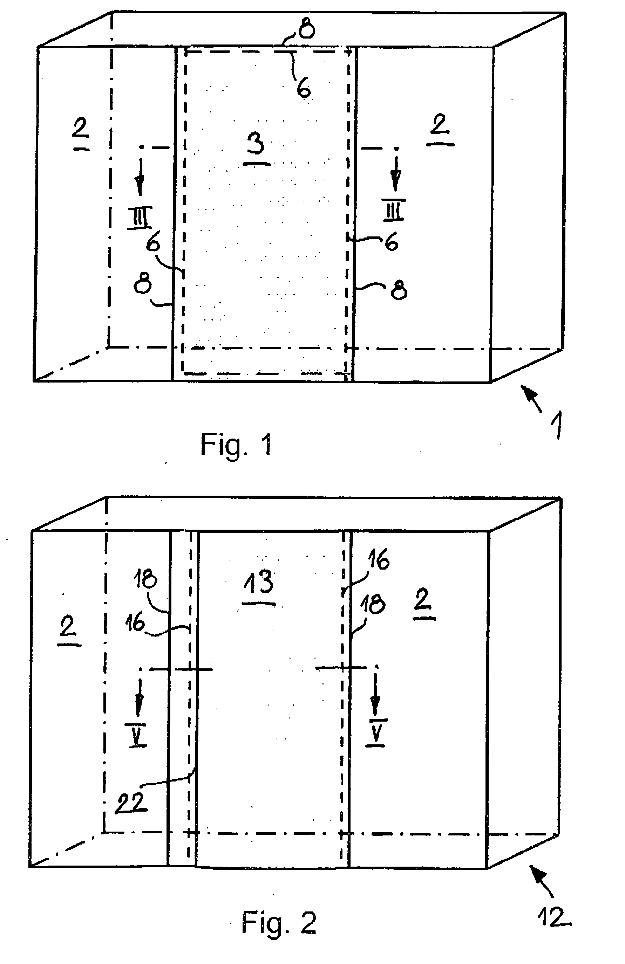

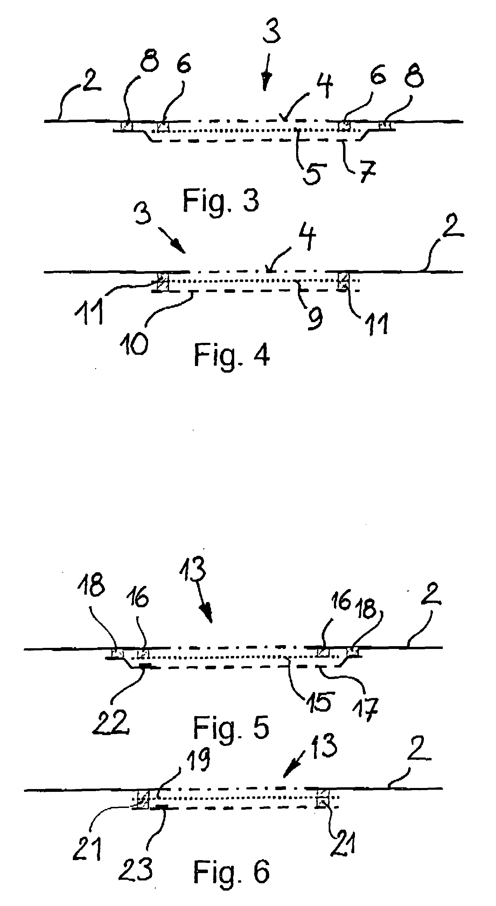

Ein in Fig. 1 insgesamt mit 1 bezeichneter Aufzuchtbeutel ist quaderförmig, bewußt schematisch, dargestellt, da er in fast beliebiger Form gestaltet sein kann, etwa als einfacher Flachbeutel, lediglich aus zwei rechteckbündigen und durch eine umlaufende Randnaht miteinander verbundenen Folienstücken, als aufstellbarer Bodenbeutel oder als Seitenfaltenbeutel, gleichfalls grundsätzlich aufstellbar und in befülltem Zustand an eine Quaderform angenähert. Der Beutel 1 weist eine Wand 2 mit einen Wandbereich 3 auf, der für Gase wie z.B. Sauerstoff und Kohlendioxid durchlässig ist. Wie aus Fig. 3 ersichtlich ist, wird die Wand 2 mit einer Perforation 4 innerhalb des Wandbereichs 3 versehen. Die Wand ist aus einer feuchtigkeits- und verrottungsfesten Kunststofffolie gebildet. Die darin angebrachte Perforation ist im vorliegenden Fall durch Nadelung erzeugt, die nicht nur Gase, sondern auch Feuchtigkeit, Keime oder ggf. Schmutz durchlassen würde, wenn sie nicht durch weitere Filterlagen abgedeckt wäre.

In dieser Hinsicht ist zur Abdeckung der Perforation 4 eine mikroporöse Folie 5 aus Kunststoff über die Perforation gelegt und allseitig mit einer dichten Siegel- oder Klebenaht an der Folie 2 befestigt. Eine weitere, die mikroporöse Folie 5 überdeckende mikroporöse Folie 7 auf der Außenseite des Aufzuchtbeutels 1 ist mit einer eigenen Randnaht 8 randseitig dichtend auf der Folie der Wand 2 festgelegt. Durch die mikroporösen Folien 5 und 7 können zwar Keime und Schmutz nicht den durchlässigen Wandbereich über der Perforation 4 durchdringen, ein Austausch von Gasen durch die mikroporösen Folien 5 und 7 hindurch ist demgegenüber möglich. Die hierbei verwendeten Folien sind Kunststofffolien, insbesondere Polyolefin-Folien, wobei für eine etwaige Dampf-Sterilisierung Polypropylen den Vorzug erhält, sonst ist auch Polyethylen-Folie geeignet. Die Dicke der Wandfolie wird zwischen 30 und 150 mm in Abhängigkeit von dem vorgegebenen Füllgut und insbesondere dem Füllgewicht vorgegeben.

Die Filterfunktion wird den mikroporösen Folien 5 und 7 zugewiesen, die beispielsweise aus einer gasdurchlässigen Polypropylen-Folie bestehen, die von Haus aus mit einem hohen Anteil von Kreide gefüllt und dann so gereckt sind, daß dabei Mikroporen eintreten. In dieser Hinsicht kann die außenliegende Folie 7 gegenüber der darunterliegenden Folie 5 feinere Poren aufweisen. Dies ist dadurch erzielbar, daß die Porengröße durch verschieden starkes Recken zu beeinflussen ist.

Wird ein solcher Aufzuchtbeutel etwa nach dem Sterilisieren mit einem Nährstoff gefüllt, der seinerseits mit einem Myzel geimpft wurde, kann sich die gewünschte Mikroorganismen-Kultur unter Gasaustausch entwickeln, ohne daß Schmutz, Keime und Feuchtigkeit eindringen und ohne daß ein Austrocknen eintritt. Sobald sich die Kultur stärker entwickelt hat, ist allerdings auch der Atmungsbedarf größer. Hierzu ist eine größere Gasdurchlässigkeit im Bereich der Perforation zu erzielen.

Zu diesem Zweck kann die durchaus schleißfähige mikroporöse Folie 7 aufgerissen werden, so daß der Gasaustausch nur noch durch eine Filterbarriere in Form der mikroporösen Folie 5 durchtreten muß. Wenn letztere mit größeren Mikroporen ausgestattet ist als die ursprünglich außenliegende Folie 7, ergibt sich eine weitere Erleichterung für den Gasaustausch.

Auch die Folie 5 kann auf- oder abgerissen werden, wenn die Kultur sich so stark und so robust entwickelt hat, daß Fremdkeime nicht mehr ferngehalten zu werden brauchen. Die Perforation 4 in der Wandfolie 2 hat dann aber immer noch die Aufgabe zu erfüllen, den Austritt von Kulturen oder deren Substratmaterial zu vermeiden.

Eine Öffnung der mikroporösen Folien ist auch an der Naht 8 bzw. an der Naht 6 zu ermöglichen, wenn diese mit bekannten Mitteln als geschwächte Siegelnaht ausgebildet ist. Klebenähte sind mit bekannten Klebstoffen peelbar auszubilden. Die Gestaltung nach Fig. 3 mit getrennt verlaufenden Randnähten 6 und 8 erlaubt es, die Nähte unabhängig voneinander aufzutrennen, d.h. die mikroporösen Folien 5 und 7 nacheinander von außen nach innen abzuheben.

Eine alternative Ausführungsform nach Fig. 2 sieht gleichfalls eine Wand 2 aus einer Wandfolie mit einem Perforationsbereich 4 vor, indem zwei übereinanderliegende mikroporöse Folien 9, 10 durch eine gemeinsame Randnaht 11 dicht mit der Wandfolie 2 verbunden sind. Diese Ausführungsform ist insbesondere für ein gemeinsames Versiegeln fertigungstechnisch vorteilhaft, wobei die Folien vorzugsweise spleißfähig zum Aufreißen ausgebildet sind.

Bei Vorstehendem versteht es sich, daß die innenliegende mikroporöse Folie 5 bzw. 9 jedenfalls dann, wenn sie nicht auch noch zum Aufreißen vorgesehen ist, auch auf der anderen, innenliegenden Seite der Wandfolie 2 angebracht werden kann.

Eine im Detail ergänzte Ausführungsform eines Aufzuchtbeutels 12 nach Fig. 2 besteht gleichfalls aus Folie, in beliebiger Form zu einem Behälter zusammengefügt, wobei in einer Wand 2 ein Wandbereich 13 ausgebildet ist, der durch Lochung, Nadelung oder Schlitzung ein relativ grobes Filter bildet, welches gemäß den Schnittdarstellungen nach Fig. 5 oder 6 durch mikroporöse Folien 15, 17 bzw. 19, 20 so abgedeckt ist, daß ein Schutz gegen Fremdkeime, Verschmutzungen und dergleichen eintritt, ein Gasaustausch aber möglich bleibt. Diese mikroporösen Folien 15, 17, 19, 20 sind gleichfalls mit nebeneinander verlaufenden dichten Randnähten 16 und 18 bzw. mit gemeinsamer Randnaht 21 mit der wand 2 verbunden. Zur Erleichterung des Aufreißens ist eine Öffnungshilfe in Form eines Aufreißfadens 22 bzw. 23 vorgesehen, der auch in seiner Längsrichtung über die Naht 18 bzw. 21 hinausgeführt sein kann, um ein Erfassen von Hand zu erleichtern. Mir Hilfe eines solchen Aufreißfadens 22, 23, der geradlinig aber auch bogen- oder winkelförmig verlaufen kann, wird das Aufreißen erleichtert. Bei von Haus aus weniger gut spleißfähigen mikroporösen Folien, etwa genadelten Folien oder verdichtetem mikroporösem Vlies-Folien kann als Öffnungshilfe neben dem Aufreißfaden eine Schwächungslinie oder deren mehrere zweckmäßig sein. Ebenso kann die mikroporöse Folie über die Randnaht hinaus zu einer Griffahne oder einem Griffbereich als Öffnungshilfe überstehen.

Im dargestellten Fall ist der Wandbereich 3, welcher mit mikroporöser Folie abgedeckt ist, als Teilbereich der Wand 2 dargestellt. Es versteht sich natürlich, daß ein solcher Wandbereich bedarfsweise auch größer auszubilden ist, etwa über die volle Fläche der Wand 2. Noch größere Atmungsflächen können dadurch geschaffen werden, daß die mikroporöse Folie auch auf der Rückseite des Beutels vorgesehen ist. Grundsätzlich kann auch ein Aufzuchtbeutel insgesamt mit einer oder mit mehreren Lagen mikroporöser Folie umschlossen und mit einer dichten Randnaht zusammengehalten sein.

## Patentansprüche

1. Aufzuchtbeutel (1,12) für Mikroorganismen mit aus Kunststofffolie gebildeten Wänden (2), bei denen zumindest ein für Sauerstoff und Kohlendioxid durchlässiger Wandbereich (3) mehrlagig mit zumindest einer Lage aus mikroporöser Folie (5,7,9,10,15,17,19,20) gebildet ist, **dadurch gekennzeichnet daß** die mikroporöse Folie (5,7,9,10,15,17,19,20) auf- oder abreißbar ausgebildet und als Außenlage mit einer dichten Randnaht (6,8,11,16,18,21) mit dem übrigen Aufzuchtbeutel (1,12) abschließt.

2. Aufzuchtbeutel (1,12) nach Anspruch 1, **dadurch gekennzeichnet, daß** die mikroporöse Folie (5,7,9,10,15,17,19,20) spleißfähig ausgebildet ist.

3. Aufzuchtbeutel nach Anspruch 2, **dadurch gekennzeichnet, daß** die mikroporöse Folie (15,17,19,20) mit zumindest einem Aufreißfaden (22) oder **der**gleichen Öffnungshilfe ausgestattet ist.

4. Aufzuchtbeutel (1,12) nach Anspruch 2 oder 3, **dadurch gekennzeichnet, daß** die mikroporöse Folie (15,17,19,20) mit zumindest einer Schwächungslinie für ein Aufreißen versehen ist.

5. Aufzuchtbeutel (1,12) nach einem der Ansprüche 1 bis 4, **dadurch gekennzeichnet, daß** die mikroporöse Folie (5,7,9,10,15,17,19,20) mit einer zumindest bereichsweise aufreißbaren Randnaht (6,8,11,16,18,21) abgeschlossen ist.

6. Aufzuchtbeutel (1,12) nach Anspruch 5, **dadurch gekennzeichnet, daß** die mikroporöse Folie (5,7,9,10,15,17,19,20) zumindest stellenweise mit einem Griffbereich über die Randnaht (6,8,11,16,18,21) übersteht.

7. Aufzuchtbeutel (1,12) nach dem Ansprüche 1 bis 6, **dadurch gekennzeichnet, daß** eine Außenlage aus der mikroporöser Folie (7,10,17,20) zumindest eine weitere Lage aus mikroporöser Folie (5,9,15,19) angeordnet ist.

8. Aufzuchtbeutel (1,12) nach Anspruch 6, **dadurch gekennzeichnet, daß** auch die weitere Lage aus mikroporöser Folie (5,9,15,19) auf- oder abreißbar ausgebildet ist.

9. Aufzuchtbeutel (1,12) nach Anspruch 7 oder 8, **dadurch gekennzeichnet, daß** die weitere Lage mikroporöser Folie (5,9,15,19) größere Poren als die Außenlage aufweist.

10. Aufzuchtbeutel (1,12) nach Anspruch 7, 8 oder 9, **dadurch gekennzeichnet, daß** die Außenlage mikroporöser Folie (7,10,17,28) und die weitere Lage auf einem durchgehenden aber perforierten Folienbereich (3,13) der Beutelwandung (2) angebracht sind.

11. Aufzuchtsbeutel (1,12) nach einem Ansprüche 1 bis 10, **dadurch gekennzeichnet, daß** die mikroporöse Folie (5,7,9,10,15,17,19,20) aus einer kreidegefüllten und hochgereckten Polyolefin-Folie besteht.

12. Aufzucihtbeutel (1, 12) nach dem der Anspruche 1 bis 10, **dadurch gekennzeichnet daß** die mikroporöse Folie (5,7,9,10,15,17,19,20) aus einem Vlies oder einer Vlies-ähnlichen Struktur besteht.

13. Aufzuchtbeutel (1,12) nach einem der Ansprüche 1 bis 10, **dadurch gekennzeichnet, daß** die mikroporöse Folie (5,7,9,10,15,17,19,20) aus einerfeinperforierten oder gelochten Kunststofffolie besteht.
